# NEUE EUROPÄISCHE PATENTSCHRIFT

(11) **EP 2 596 036 B2**
(45) Veröffentlichungstag und Bekanntmachung des Hinweises auf die Entscheidung über den Einspruch: **22.06.2022**
(45) Hinweis auf die Patenterteilung: 23.05.2018
(21) Anmeldenummer: 11730936.9
(22) Anmeldetag: 29.06.2011
(51) Int. Cl.: C08G 18/10, C08G 18/12, C08G 18/40, C08G 18/76, C08J 9/14

(54) **HAFTFESTER MONOMERARMER PU-SCHAUM**
ADHESIVE LOW-MONOMER PU FOAM
MOUSSE POLYURÉTHANE ADHÉSIVE PAUVRE EN MONOMÈRES

(30) Priorität: 23.07.2010 DE 102010038355
(43) Veröffentlichungstag der Anmeldung: 29.05.2013
(73) Patentinhaber: Henkel AG & Co. KGaA, 40589 Düsseldorf (DE)
(72) Erfinder: FRANKEN, Uwe, 41542 Dormagen (DE); KREBS, Michael, 40724 Hilden (DE); LOHR, Christoph, 40822 Mettmann (DE); SEBESTIAN, Milan, 41515 Grevenbroich (DE); KOLENDA, Felicitas, 40789 Monheim (DE)
(86) Internationale Anmeldenummer: PCT/EP2011/060877
(87) Internationale Veröffentlichungsnummer: WO 2012/010389

(56) Entgegenhaltungen:
- WO-A1-02/079291
- WO-A1-02/079291
- WO-A1-2005/007721
- WO-A1-2005/054324
- WO-A1-2011/036018
- DE-A1- 10 311 607
- D.K. CHATTOPADHYAY et al.: "Structural engineering of polyurethane coatings for high performance applications", Prog. Polym. Sci., vol. 32, 2007, pages 352-418, DOI: 10.1016/j.progpolymsci.2006.05.003

## Beschreibung

Die Erfindung betrifft monomerarme Ein-Komponenten-Polyurethanschäume. Dabei werden lagerstabile vernetzbare Schaumvorläufer bereitgestellt, die eine hohe Reaktivität aufweisen und bei der Anwendung eine hohe Anfangsfestigkeit des Schaummaterials ergeben.

Einkomponenten PUR Schäume werden hauptsächlich für das Dichten und Dämmen von Fugen im Bau- und Heimwerkerbereich eingesetzt. Bei solchen Anwendungen wird das Schaum-Produkt aus einer Aerosoldose appliziert und zum Beispiel zum Einbau von Tür- und Fensterrahmen in Gebäuden verwendet. Um die Fugen zwischen Rahmen und Wand auszuschäumen, ist es notwendig, dass die anfängliche Viskosität des Schaums niedrig genug ist, um eine ausreichend Expansion des Schaums in der Fuge sicherzustellen. Der Einkomponenten- PUR Schaum wird durch die Vernetzungsreaktionen mit Feuchtigkeit fest.

Moderne PUR Schaumzusammensetzungen umfassen normalerweise ein Prepolymer, welches aus einer Isocyanat- und einer Polyolkomponente gebildet wird. Ein hoher Gehalt an monomeren Diisocyanaten ist notwendig gewesen, um einen Polyurethanschaum mit ausreichender Festigkeit und niedriger Viskosität zu erzeugen. Die niedrigere Viskosität ermöglicht eine gute Schäumbarkeit und Füllbarkeit der Fuge sowie ein zufriedenstellendes Dosieren aus der Dose bei Verarbeitungstemperatur. Außerdem trägt das monomere Diisocyanat bei herkömmlichen Schäumen auch bedeutend zur Reaktionsfähigkeit des Schaums bei. Deshalb haben Einkomponentenschäume bis heute einen bedeutenden Gehalt an monomeren Diisocyanaten.

Das verursacht Probleme bei der Verarbeitung in der Weise, dass während des Ausbringens (Ausschäumens) des Inhaltes aus der Aerosoldose flüchtige monomere Diisocyanate in die Arbeitsatmosphäre abgegeben werden. Das ist im Hinblick auf die gesundheitsschädliche Wirkung der monomeren Isocyanate zu vermeiden. Dadurch ergeben sich Einschränkungen in der Anwendung nicht monomerarmer PU-Schäume.

In der WO 02/079292 werden Klebstoffpolymere beschrieben, die ein Prepolymer aus einer Isocyanatkomponente, einem Polyol und einer niedrigviskosen nicht mit Isocyanaten und OH-Gruppen reaktiven Komponente enthalten. Dabei sollen die monomeren Diisocyanate in der Zusammensetzung weniger als 2 % betragen. Als nicht-reaktive niedrigviskose Komponente werden Phosphatsäureester, Adipinsäureester oder Phthalsäureester beschrieben.

Weiterhin ist die WO 02/090410 bekannt. Diese beschreibt ein Prepolymer, das erhalten werden kann durch Umsetzung eines Polyols mit einer Funktionalität von < 3, einer Isocyanatkomponente mit einer Funktionalität von 2 bis 2,7, sowie einem niedrigmolekularen einwertigen Alkohol. Dieses Prepolymer wird in der Verpackung, einer Druckdose, hergestellt und so können aus dem so entstandenen Prepolymer PU-Schäume hergestellt werden. Als Polyolkomponente werden eine Liste von verschiedenen Polyolen aufgezählt.

Weiterhin ist die WO 2005/054324 bekannt. Diese beschreibt Prepolymerzusammensetzungen zur Erzeugung von PU-Schäumen, wobei Polyisocyanate und Polyole enthalten sein können. Das Prepolymer wird durch Reaktion von asymmetrischen Polyisocyanaten mit sterisch gehinderten Polyolen mit wenigstens zwei OH-Funktionen erhalten. Es werden weiter höher funktionalisierte Polyole zugegeben, die dann mit dem NCO-reaktiven Prepolymer reagieren. Eine Verringerung des Anteils der Monomere wird nicht beschrieben.

Es ist bekannt, dass aus PU-Prepolymeren basierend auf Polyetherpolyolen Schäume hergestellt werden können. Diese können zusammen mit vorhandenen monomeren Isocyanaten zu PU-Schäumen verarbeitet werden. Werden diese monomerarm eingestellt, ist die Viskosität jedoch so hoch, dass diese Produkte häufig nur mit weiteren verdünnenden Substanzen, wie Weichmachern oder Lösemitteln eingesetzt werden können. Lösemittel sind nachteilig für die Gesundheit bei der Verarbeitung. Weichmacher können aus dem vernetzten Schaum diffundieren, so dass die Haftung zu den Substraten negativ beeinflusst wird. Ein weiterer Nachteil ist die fehlende Anfangsfestigkeit, die sich aus dem hohen Anteil zu vernetzender reaktiver Gruppen ergibt.

Die Nachteile der PU-Prepolymere führen zusammen mit der unter Arbeitsschutzbedingungen erwünschten Reduzierung der Isocyanatmonomere zu Prepolymeren, die nicht oder nur zusammen mit weiteren niedermolekularen Lösemitteln verarbeitet werden können. Deswegen ergibt sich die Aufgabe, monomerarme PU-Prepolymere bereitzustellen, die über NCO-Gruppen vernetzen können, die wenig Lösemittel oder Weichmacher enthalten, die aber eine ausreichend niedrige Viskosität aufweisen, um als Schaummaterialien in reaktiven Schäumen eingesetzt zu werden. Weiterhin sollen die daraus entstehenden Polymerschäume auch eine hohe Anfangsfestigkeit unter Belastung aufweisen. Dabei sollen die guten mechanischen Eigenschaften des vernetzten Schaums erhalten bleiben.

Die Aufgabe wird gelöst nach Anspruch 1 durch eine vernetzbare schäumbare Zusammensetzung mit niedrigem Gehalt an monomeren Isocyanaten enthaltend 70 bis 99,8 Gew-% von Prepolymeren hergestellt aus Polyetherpolyolen durch Umsetzung mit einem Überschuss an aromatischen Diisocyanaten und nachfolgender Entfernung von überschüs-sigem monomeren Diisocyanat, 0,2 bis 30 Gew-% Additive und zusätzlich mindestens ein Treibmittel, wobei die Polyole eine Funktionalität unter 2,5 aufweisen, die Polyole eine zahlenmittlere Molmasse (MN) zwischen 150 und 3000 g/mol aufweisen und die Prepolymere einen Gehalt monomeren Diisocyanaten unter 5 Gew-% aufweisen und wobei die Zusammensetzungen ohne Treibmittel eine Viskosität zwischen 20000 und 150000 mPAs bei 50°C (Brookfield/EN ISO 2555 (Spindel 27; 5 min-1) aufweisen.

Ein notwendiger Bestandteil der erfindungsgemäßen Zusammensetzung sind Prepolymere auf Basis von Polyetherpolyolen. Es handelt sich dabei um NCO-reaktive Prepolymere, wobei diese monomerarm sein müssen. Diese Prepolymere sollen eine geeignete Viskosität aufweisen, damit sie einerseits als Schaum zu verarbeiten sind, andererseits eine hohe Anfangsfestigkeit entwickeln.

Geeignete Prepolymere können durch Reaktion von Polyolen mit Diisocyanaten hergestellt werden, wobei die Polyole nur einen geringen Verzweigungsgrad aufweisen. Dabei soll die Funktionalität einzeln oder als Mischung unter 2,5 betragen, bevorzugt unter 2,3. Insbesondere sollen im Wesentlichen lineare Diole eingesetzt werden. Einwertige Alkohole sind zu vermeiden, um ein Netzwerk nach der Vernetzung zu erhalten. Die Molmasse der Polyole kann einzeln bestimmt werden, erfindungsgemäß ist es jedoch ausreichend wenn die Mischung der Polymere eine entsprechende mittlere Molmasse aufweist.

Beispiele für Prepolymere sind auf Basis von Polyesterpolyolen. Diese sind durch Reaktion von Polyesterpolyolen mit einem Überschuss an Diisocyanaten herstellbar. Geeignete Polyesterpolyole sind Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignete Diole sind beispielsweise Ethylenglykol, 1,2 oder 1,3- Propandiol, 1,2-oder 1,4-Butandiol, Pentandiol, die isomeren Hexandiole, Octandiol, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol oder Polybutylenglykol. Es können auch aromatische Diole eingesetzt werden.

Die eingesetzten Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Gemische aus zwei oder mehr davon geeignet. Als Tricarbonsäuren, die gegebenenfalls in geringen Mengen enthalten sein können, sind beispielsweise Zitronensäure oder Trimellithsäure geeignet. Alle genannten Säuren können einzeln oder als Gemische aus zwei oder mehr davon eingesetzt werden.

Dem Fachmann sind solche OH-funktionelle Polyester bekannt und sie sind kommerziell erhältlich. Insbesondere geeignet sind drei oder insbesondere zwei endständige OH-Gruppen aufweisende Polyesterpolyole.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Polyesterpolyole weisen in einer Ausführungsform eine Molmasse von ca. 150 bis 5 000 g/mol auf, insbesondere 200 bis 2000 g/mol (zahlenmittlere Molmasse, M_{N}). Insbesondere sind auch Polyesterpolyole geeignet, die auch anteilig aromatische Strukturen enthalten, beispielsweise aromatische Carbonsäuren.

Beispiele für geeignete Prepolymere sind solche auf Basis von Polyetherpolyolen. Diese werden beispielsweise hergestellt durch Umsetzung von Polyetherpolyolen mit Isocyanaten im stöchiometrischen Überschuss.

Geeignete Polyetherpolyole sind beispielsweise Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, Hexandiolen, 2,2-Dimethyl-1,3-propandiol, 2-Methylpropandiol, 1,6-Hexandiol, 2,4,4-Trimethylhexandiol-1,6, 2,2,4- Trimethylhexandiol-1,6, 1,4-Cyclohexandimethanol, oder aromatischen Diolen, wie 4,4'-Dihydroxy-diphenylpropan Bisphenols A, Bisphenols F, Brenzkatechins, des Resorcins, des Hydrochinons oder Gemischen aus zwei oder mehr davon. Ferner können auch die Umsetzungsprodukte polyfunktioneller Alkohole, wie Glycerin, Trimethylolethan oder Trimethylolpropan, Pentaerythrit oder Zuckeralkohole mit den Alkylenoxiden geeignet sein. Weitere, im Rahmen der Erfindung geeignete Polyole, entstehen durch Polymerisation von Tetrahydrofuran (Poly-THF).

Die Polyetherpolyole werden in dem Fachmann bekannter Weise hergestellt und sind kommerziell erhältlich. Es sollen erfindungsgemäß niedermolekulare Polyether ausgesucht werden, beispielsweise sind Polyetherpolyole mit einer Molmasse von 150 bis 5 000 g/mol, insbesondere bis 3 000, vorzugsweise 200 bis 2000 g/mol geeignet. Insbesondere sind Diole geeignet, wie Homopolymere des Polyethylenglykols, Propylenglykols, Block- oder statistische Copolymere aus Ethylenglykol und Propylenglykol.

Als Isocyanate zur Herstellung der NCO-haltigen Prepolymere sind die bekannten aromatischen Diisocyanate geeignet. Diese haben vorzugsweise eine Molmasse unter 500g/mol. Als Diisocyanate können beispielsweise eingesetzt werden Ethylendiisocyanat, 1,4-Tetramethylendiisocyanat, 1,4-Tetramethoxybutandi-isocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI) oder Isomerengemische des TDI, 2,4'-Diphenylmethandiisocyanat, 2,2'-Diphenylmethandiisocyanat oder 4,4'-Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate .

Es können auch asymmetrische Isocyanate eingesetzt werden, die NCO-Gruppen mit einer unterschiedlichen Reaktivität gegenüber Diolen besitzen. Beispiele für geeignete cycloaliphatische asymmetrische Diisocyanate sind z.B. 1-Isocyanato methyl-3-isocyanato-1,5,5-trimethyl-cyclohexan (Isophorondiisocyanat, IPDI), 1-Methyl-2,4-diiso-cyanato-cyclohexan, 1,4-Diisocyanato-2,2,6-trimethylcyclohexan (TMCDI), oder Hydrierungsprodukte der vorgenannten aromatischen Diisocyanate, beispielsweise hydriertes MDI in isomerenreiner Form, bevorzugt hydriertes 2,4'-MDI. Beispiele für bevorzugt geeignete aromatische asymmetrische Diisocyanate sind 1,3-Phenylendiisocyanat, 2,4-Toluylendiisocyanats (TDI), entweder in isomerenreiner Form oder als Mischung mehrerer Isomerer, Naphthalin-1,5-diisocyanat (NDI), Diphenylmethan-2,4'-diisocyanat (MDI) sowie Mischungen des 4,4'-Diphenylmethandi-isocyanats mit dem 2,4'-MDI-Isomeren. Bevorzugt sollen aromatische Diisocyanate eingesetzt, insbesondere 4,4'-MDI.

Eine Ausführungsform setzt asymmetrische Isocyanate ein. Eine bevorzugte Ausführungsform setzt die Polyole einzeln oder als Mischung mit einem Überschuss an symmetrischen Diisocyanaten um. Die Reaktion der monomeren Diisocyanate mit den Polyolen erfolgt nach bekannten Verfahren bei einer Temperatur zwischen 20°C bis 100°C, bevorzugt zwischen 40 bis 75°C. Die Mengen werden so gewählt, dass eine NCO-terminiertes Prepolymer erhalten wird. Beispielsweise wird ein Überschuss von 2:1 bis 10:1 NCO / OH eingesetzt, sodass im Wesentlichen nur endständig umgesetzte Polymere erhalten werden. Durch das gewählte Verhältnis von Diol und Diisocyanat kann erreicht werden, dass kein wesentlicher Molekulargewichtsaufbau der Prepolymere erhalten wird. Die Polyetherprepolymere sollen zwischen statistisch 1,7 bis 2,3 NCO-Gruppen enthalten, insbesondere zwei NCO-Gruppen pro Molekülkette. Ganz besonders bevorzugt werden Prepolymere eingesetzt, die nur einen geringen Molekulargewichtsaufbau durch die Herstellung aufweisen. Es sollen niedrige Gehalte an monomeren Isocyanaten erhalten werden. Nicht reagierende Anteile der Isocyanate werden anschließend im Vakuum als Monomer abdestilliert. Die Prepolymere enthalten erfindungsgemäß Anteile an monomeren Diisocyanaten von weniger als 5 Gew-%, bevorzugt unter 2 Gew-%, insbesondere unter 1,0 Gew-%. Der geringe Gehalt an monomeren Diisocyanaten der erfindungsgemäßen Zusammensetzungen wird durch die verminderten Mengen an monomeren Isocyanaten in den Prepolymeren erzielt.

Die Prepolymere haben im monomerarmen Zustand eine Viskosität von 3000 bis 150000 mPas bei 50°C. Insbesondere sind Polyetherprepolymere und Gemische davon bevorzugt.

Die erfindungsgemäße Zusammensetzung als Schaumvorläufer muss mindestens ein Prepolymer auf Basis von Polyetherpolyolen enthalten. Die Menge soll zwischen 70 bis 99,8 Gew.-% bezogen auf die gesamte Zusammensetzung enthalten, ohneTreibmittel. Es können 0,2 bis zu 30 Gew.-% Additive enthalten sein. Dabei ist es möglich die monomerarmen Prepolymere einzeln herzustellen und zu mischen oder als Gemisch zu synthetisieren. Dabei können Polyetherpolyole unterschiedlicher Molmassen eingesetzt werden. Die Viskosität der Mischung der nicht flüchtigen Komponenten beträgt zwischen 20 000 bis 150 000 mPas gemessen bei 50°C (gemessen Brookfield, EN ISO 2555).

Auch wenn die Zusammensetzung Prepolymere einsetzt, die eine geringere Menge an monomeren Isocyanaten aufweisen, kann es zweckmäßig sein, zusätzlich nicht flüchtige oligomere Isocyanat-Derivate zuzusetzen. Dabei kann es sich beispielsweise um aliphatische oder aromatische Isocyanurate, Allophanate und Biurete handeln. Auch polymere aromatische Isocyanate, wie p-MDI können eingesetzt werden. Wesentlich für die Auswahl dieser oligomeren Isocyanatderivate ist es, dass es sich um solche Substanze handelt, die bei Raumtemperatur nur einen niedrigen Dampfdruck aufweisen, beispielsweise unter 0,005 mbar bei 25°C. Diese Substanzen sollen also im Wesentlichen frei von monomeren Diisocyanaten sein.

Weiterhin soll die erfindungsgemäße Zusammensetzung als Schaumvorläufer auch für die Schaumherstellung bekannte Additive enthalten. Es kann sich dabei beispielsweise um Weichmacher, Stabilisatoren, Haftvermittler, Farbstoffe, Duftstoffe, nicht reaktive Polymere, Katalysatoren, Flammschutzmittel, Biozide, Zellöffner und ähnliche Zusatzstoffe handeln. Dabei ist es zweckmäßig den Anteil von nicht im Polymer anreagierten Bestandteilen, wie Weichmacher oder Flammschutzmittel möglichst gering zu halten. Flüchtige Bestandteile, insbesondere Lösemittel, sollen nicht eingesetzt werden.

Weichmacher können in dem Schaumvorläufer bis zu 30 Gew.-% enthalten sein, bezogen auf die Gesamtzusammensetzung, bevorzugt unter 5 Gew.-%, insbesondere auch keine Weichmacher.

Eine erfindungsgemäße Zusammensetzung kann zusätzlich zu den reaktiven Prepolymeren bis zu 25 Gew.-% von weiteren nicht-reaktiven Polymeren enthalten. Es soll sich dabei um feste Polymere handeln, die keine mit Isocyanatgruppen vernetzbaren funktionellen Gruppen aufweisen. Sie sollen homogen mit den Prepolymeren mischbar sein. Mit diesen zusätzlichen Polymeren können Eigenschaften des vernetzten Schaummaterials, wie Härte, Elastizität, Feuchtigkeit zu erhalten beeinflusst werden. Es kann sich beispielsweise um Polyacrylate, nicht-reaktive Polyurethane, Vinylacetatcopolymere, Polyester oder aromatische Blockcopolymere handeln.

Unter Stabilisatoren im Sinne dieser Erfindung sind Antioxidantien, UV-Stabilisatoren, Hydrolyse-Stabilisatoren oder Schaumstabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Ferner können auch Benzotriazole, Benzophenone, Benzoate, Cyanacrylate, Acrylate oder sterisch gehinderte Phenole zugegeben werden. Beispiele für Schaumstabilisatoren sind Polyethersiloxane, wie Copolymerisate aus Ethylenoxid und Propylenoxid verbunden mit einem Polydimethylsiloxanrest, über Allophanatgruppen verzweigte Polysiloxan-Polyoxyalkylen-Copolymere, andere Organospolysiloxane, wie Dimethylpolysiloxane; oxyethylierte Alkylphenole, oxyethylierte Fettalkohole, und/oder Paraffinöle. Zur Verbesserung der Emulgierwirkung, der Zellstruktur und/oder zu deren Stabilisierung eignen sich ferner oligomere Polyacrylate mit Polyoxyalkylen- und Fluoralkanresten als Seitengruppen. Die erfindungsgemäßen schäumbaren Mischungen können Stabilisatoren z.B. in Mengenbereichen zwischen 0,1 und 5 Gew.% enthalten, bezogen auf die Mischung der nicht flüchtigen Anteile.

Bei Bedarf können als Haftvermittler vorzugsweise organofunktionelle Silane wie hydroxyfunktionelle, (meth)acryloxyfunktionelle, mercaptofunktionelle, aminofunktionelle oder epoxyfunktionelle Silane verwendet werden. Die Mengen können von 0 bis 10 Gew.% betragen, vorzugsweise zwischen 0 und 5 Gew.%, bezogen auf die Mischung.

Es können auch Katalysatoren enthalten sein. Als Katalysatoren können alle bekannten Verbindungen eingesetzt werden, die Isocyanatreaktionen katalysieren können. Beispiele hierfür sind Titanate wie Tetrabutyltitanat und Tetrapropyltitanat, Zinncarboxylate wie Dibutylzinndilaulat (DBTL), Dibutylzinndiacetat, Zinnoctoat; Zinnoxide wie Dibutylzinnoxid, und Dioctylzinnoxid; Organoaluminumverbindungen wie Aluminumtrisacetylacetonat, Aluminumtrisethylacetoacetat; Chelatverbindungen wie Titantetraacetylacetonat; Aminverbindungen wie Triethylenediamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)-undecen-7 (DBU), 1,4-Diazabicyclo[2,2,2]octan, N,N-Dimethylpiperazin, 1,8-Diazabicyclo[5.4.0]undec-7-en, Dimorpholinodimethylether, Dimorpholinodiethylether (DMDEE) oder deren Mischungen. Die Katalysatoren werden vorzugsweise in einer Menge von 0,01 bis etwa 5 Gew.-% bezogen auf das Gesamtgewicht der Zusammensetzung eingesetzt.

Die erfindungsgemäße schäumbare Mischung kann auch mindestens ein flüssiges Flammschutzmittel enthalten. Das Flammschutzmittel kann ausgewählt werden aus der Gruppe halogenierte (insbesondere bromierte) Ether vom Typ "Ixol" der Fa. Solvay, 3,4,5,6-tetrabromo-, 2-(2-hydroxyethoxy)ethyl-2-hydroxypropyl ester), organische Phosphate, insbesondere Diethyl-ethanphosphonat, Triethylphosphat, Dimethylpropylphosphonat, Diphenylkresylphosphat, sowie chlorierte Phosphate, insbesondere Tris-(2-chlorethyl)phosphat, Tris-(2-chlorisopropyl)phosphat, Tris(1,3-dichlorisopropyl)-phosphat, Tris-(2,3-dibrompropyl)phosphat und Tetrakis-(2-chlorethyl)-ethylendiphosphat oder deren Mischungen. Eine Ausführungsform wählt solche Flammschutzmittel aus, die keine Hydroxylgruppen aufweisen, da diese den Gehalt an reaktiven NCO-Gruppen vermindern. Vorzugsweise enthält die Mischung das Flammschutzmittel in einer Menge von unter 30 Gew.-%, bevorzugt weniger als 10 Gew.-%, insbesondere unter 5 Gew.-%.

Eine erfindungsgemäße schäumbare Zusammensetzung enthält neben dem Gemisch der Prepolymere mindestens ein Treibmittel. Als Treibmittel können prinzipiell eine Vielzahl leichtflüchtiger Verbindungen eingesetzt werden, die bei Anwendungstemperatur, beispielsweise bei 20°C, flüchtig sind und verdampfen können. Treibmittel werden ausgewählt aus Kohlenwasserstoffen und/oder Fluorkohlenwasserstoffen mit jeweils 1-5 Kohlenstoffatomen und/oder Ether mit einem Molekulargewicht unter 120g/mol, wie Dimethylether (DME), Diethylether, Dimethoxymethan, Dimethoxyethan sowie deren Mischungen, beispielsweise eine Mischung aus DME / Propan / Isobutan / n-Butan.

In einer besonderen Ausführungsform ist es zweckmäßig, dass mindestens anteilsweise polare Treibmittel enthalten sind. Gegebenenfalls können zusätzlich unpolare Treibmittel eingesetzt werden. Als unpolare Treibmittel werden die bekannten leichflüchtigen Kohlenwasserstoffe verstanden, die 1 bis 5 Kohlenstoffatome aufweisen. Als polare Treibmittel werden solche Substanzen verstanden, die bei 20°C einen erheblichen Dampfdruck aufweisen und eine Polarität zeigen. Es handelt sich dabei um Verbindungen, die zusätzlich zu Kohlenwasserstoffeinheiten weitere Heteroatome aufweisen, insbesondere Sauerstoff, Fluor oder Chlor. Beispiele für solche Verbindungen sind Dimethylether (DME), Diethylether, Dimethoxymethan, Dimethoxyethan, 1,1-Difluorethan (R152a) oder 1,1,1,2-Tetrafluorethan (R134a). Solche polaren Treibmittel können einzeln oder im Gemisch enthalten sein.

Die Treibmittel werden beispielsweise in Mengen von 5 bis 40 Gew.%, vorzugsweise von 10 bis 30 Gew.%, bezogen auf die gesamte schäumbare Mischung eingesetzt. Insbesondere soll ein hoher Anteil an polaren Treibmitteln eingesetzt werden, beispielsweise sollen mehr als 25 % bezogen auf die Menge der Treibmittel polare Treibmittel enthalten sein, insbesondere mehr als 50 %. Ganz besonders bevorzugt sind DME und/oder Dimethoxymethan als polares Treibmittel.

Eine bevorzugte Ausführungsform des erfindungsgemäßen Schaumvorläufers kann enthalten 70 bis 99,8 Gew-%, bevorzugt 75 bis 98 Gew-% von reaktiven Prepolymeren enthalten, insbesondere Polyoxyalkylenprepolymere, 0,2 bis 30 Gew-% Additive, insbesondere Katalysatoren, Zellöffner, Haftvermittler und/oder Stabilisatoren. Dabei soll die Zusammensetzung einen NCO-Gehalt zwischen 2 bis 15 % aufweisen. Die Gesamtheit dieser nichtflüchtigen Bestandteile soll 100 Gew-% betragen. Zusätzlich enthält die erfindungsgemäße Mischung noch die oben erwähnten inerten Treibmittel.

Durch die Auswahl der Polymere weist eine erfindungsgemäße aufgeschäumte Zusammensetzung noch vor der endgültigen Vernetzung eine hohe Anfangsfestigkeit auf. Diese kann als Haftzugfestigkeit bestimmt werden, die die Bewegung der verbundenen Substarte gegeneinander misst. Unter Haftzugfestigkeit soll im Rahmen dieser Anmeldung verstanden werden, dass eine geschäumte Mischung in einen definierten Zwischenraum zwischen zwei Prüfkörpern geschäumt wird und nach einer vorgegebenen Zeit die Klebkraft senkrecht zur verklebten Oberfläche gemessen wird. Die Haftzugfestigkeit der erfindungemäßen Zusammensetzung nach dem Aufschäumen beträgt über 1 N/cm², gemessen bei 25°C nach zwei Stunden. Insbesondere soll die Haftzugfestigkeit über 2 N/cm² betragen, besonders bevorzugt über 3 N/cm². Durch die hohe Haftzugfestigkeit ist sichergestellt, dass eine schnelle Fixierung der zu verschäumenden Bauteile ermöglicht wird.

Ein weiterer Gegenstand der Erfindung ist ein Verfahren zum Herstellen der erfindungsgemäßen schäumbaren, vernetzbaren Zusammensetzungen. Gemäß diesem Verfahren wird ein Prepolymer aus mindestens einem Polyetherdiol mit einem molaren Überschuss an aromatischen Isocyanaten umgesetzt. Dabei soll dieser Überschuss ein NCO:OH-Verhältnis von 2:1 bis 10:1 umfassen. Nach der Reaktion wird das nicht reagierte monomere Diisocyanat abdestilliert beispielsweise auf einen Gehalt von weniger als 5 Gew.-% bezogen auf das Prepolymer, bevorzugt weniger als 2 Gew.-%, insbesondere unter 1 Gew.-%. In einer besonderen Ausführungsform ist das Prepolymer praktisch frei von monomeren Isocyanaten, d.h. enthält weniger als 0,1 Gew-%. Dabei ist es möglich, das abdestillierte Diisocyanat wieder bei der Synthese der Prepolymere einzusetzen. Bei den besonders geeigneten Isocyanaten für das Verfahren handelt es sich um aromatische Isocyanate, wie 2,4'- oder 4,4'-MDI oder Gemische. Nach der Verminderung der Monomere kann das Prepolymer zusammen mit den weiteren Additiven in die Verpackung abgefüllt und gemischt werden.

Weiterhin wird zu dieser Mischung mindestens ein Treibgas zugesetzt. Bevorzugt wird eine Mischung von polaren und unpolaren Treibgasen eingesetzt. Das kann durch Mischen der Prepolymer/Additivmischung mit Treibgas geschehen, wobei diese Mischung dann in die entsprechenden Einweg-Druckgebinde abgefüllt wird. Es ist ebenso möglich, die Prepolymere und Additive einzeln in den entsprechenden Behälter zu geben und die Treibgase danach zuzusetzen. Auf bekannte Art und Weise werden die Komponenten miteinander vermischt. Das Mischen der Komponenten kann auch durch Erwärmen unterstützt werden, so dass die Verarbeitungsprozesse schneller ablaufen.

Ein weiterer Gegenstand der vorliegenden Erfindung ist ein Einweg-Druckbehälter enthaltend eine erfindungsgemäße schäumbare Mischung. Der Einweg-Druckbehälter (Aerosol-Dose) enthält also mindestens ein Polyetherprepolymer und mindestens ein Treibmittel. Um eine gute Verarbeitbarkeit der Mischung - insbesondere das Befüllen der Behälter - zu ermöglichen, kann die Viskosität der Mischung mit den nicht flüchtigen Bestandteilen erfindungsgemäß 3 000 bis 150.000 mPas betragen (gemessen bei 50°C). Die Mischungen, abgefüllt in Einweg-Druck-Behältern sind über einen Zeitraum von mindestens 6 Monate lagerstabil, soweit unter wasserfreien Bedingungen gearbeitet wird.

Die erfindungsgemäße Zusammensetzung weist eine Viskosität auf, die eine gute und leichte Applikation in Form einer Sprühapplikation aus einer Druckdose ermöglicht. Die aufgetragene Zusammensetzung schäumt auf. Die erfindungsgemäßen schäumbaren Zusammensetzungen härten nach dem Ausbringen aus der Aerosoldose durch Reaktion mit der umgebenden Luftfeuchtigkeit zu feinzelligen Schäumen aus, so dass die Zusammensetzungen zum Dichten, Dämmen und/oder Montieren, z.B. von Fugen, Dachflächen, Fenstern und Türen oder zum Ausfüllen von Hohlräumen geeignet sind.

Ein weiterer Vorteil der erfindungsgemäßen Zusammensetzung ist die hohe Standfestigkeit des frisch ausgebrachten nicht-vernetzten Schaums (Froth). Um eine gute Anwendbarkeit der Schaummaterialien sicherzustellen, werden diese an vorgegebenen Stellen platziert. Es ist notwendig, dass der sich bildende Schaum an diesen vorgegebenen Applikationsstellen bleibt und sich dort nur ausdehnt. Ein Abrutschen infolge der Schwerkraft soll vermieden werden. Der sich ausbildende Schaum aus der erfindungsgemäßen schäumbaren Zusammensetzung weist eine hervorragende Standfestigkeit auf. Ein Abrutschen ist nicht zu beobachten. Die Standfestigkeit wird mit einem Versuch in einer festgelegten Umgebung bestimmt (Abrutschtest gemäß TM 1006:2010, Feica).

Ein weiterer Gegenstand der vorliegenden Erfindung ist daher auch die Verwendung einer erfindungsgemäßen schäumbaren Mischung zum Dichten, Dämmen und/oder Montieren von Fugen, Dachflächen, Fenstern und Türen oder zum Ausfüllen von Hohlräumen.

Die erfindungsgemäßen schäumbaren Zusammensetzungen sind insbesondere zur Verwendung als 1K-Dosenschaum einzusetzen. Diese werden üblicherweise als Montage- oder Bauschaum eingesetzt, d.h. sie werden zur Herstellung und Lagerung und Transport in Aerosoldosen gefüllt und unmittelbar bei der Anwendung ausgetragen und aufgeschäumt. Durch die erfindungsgemäße Zusammensetzung ist es möglich, Isocyanat-reaktive Polyurethanschäume herzustellen, die einen geringen Monomergehalt aufweisen. Diese weisen eine Zusammensetzung auf, die eine ausreichende Viskosität zeigt, um mit den bekannten Treibmitteln verschäumbar zu sein. Die erfindungsgemäßen Schaumvorläufer härten mit der vorhandenen Luftfeuchtigkeit aus und ergeben kleinzellige, mechanisch stabile Schäume.

Durch den niedrigen Gehalt an freien Isocyanaten werden die Anforderungen im Bezug auf Arbeitssicherheit und Gesundheitsschutz erfüllt. Die technischen Anwendungseigenschaften der geschäumten Materialien sind im Vergleich zu bekannten Stand der Technik verbessert. Die mechanischen Eigenschaften der vernetzten Materialien sind vergleichbar gut.

### Messmethoden:

Die Haftzugfestigkeit wird gemessen nach folgendem Testverfahren:
Zwischen zwei waagerechten Prüfplatten (10x20 cm) im Abstand von 2 cm wird der Schaum aufgebracht (Normatmosphäre, 25°C). Überstehender Schaum wird entfernt. Nach einer Wartezeit von 2 Stunden, die zur Ausbildung des Schaums dient, wird die Zugfestigkeit durch Messen der Kraft bei Zug senkrecht zu den Prüfkörper gemessen (Zwick-Zugprüfmaschine).

Abrutschtest nach Test -Methode TM 1006:2010 (FEICA):
Dabei wird das Material in eine offenen senkrechte Fuge mit einer Spaltbreite von 5 cm verschäumt bei einer Temperatur von 5°C.

Es wird überprüft, ob der Schaum aus der Fuge rutscht, abtropft oder an unteren Ende eine Ausbuchtung bildet.

Viskosität nach Brookfield / EN ISO 2555 (Spindel 27, 5 min⁻¹)
Molmasse als zahlenmittlere Molmasse, M_{N} durch GPC (gegen Polystyrolstandard) OHZ: OH-Zahl mg KOH/g Festkörper

### Beispiele

### Prepolymer 1

| | |
|---|---|
| PPG 400 | Polypropylenglykol 400 (Lupranol 400 / BASF) OHZ: 256 |
| MDI | 4,4'-Diphenylmethandiisocyanat (Desmodur 44 M / Bayer) Viskosität 45 000 mPas |

### Prepolymer 2 (komparativ)

| | |
|---|---|
| PPG 400 | Polypropylenglykol 400 |
| PES | Polyester aus Adipinsäure/Phthalsäure mit 1,2-Propandiol/ Diethylenglykol; Mischung OHZ: 220 |
| MDI | 4,4'-Diphenylmethandiisocyanat (Desmodur 44 M / Bayer) Viskosität 75000 mPas |

### Prepolymer 3

| | |
|---|---|
| PPG 400 | Polypropylenglykol 400 (Lupranol 400 / BASF) OHZ: 256 |
| MIS | Gemisch aus 2,4' und 4,4'- Diphenylmethandiisocyanat (Luprannat MIS) Viskosität 40000mPas |

Aus den Diolen wird mit einem Überschuss des Diisocyanats (Molverhältnis 6 :1) ein Prepolymer hergestellt. Dieses wird nach Ende der Reaktion mittels eines Dünnschichtverdampfers im Vakuum von nicht reagiertem monomeren Isocyanat befreit. Der Restmonomergehalt einer jeden Probe ist kleiner als 0,5 Gew.-% monomeres MDI.

Zu dem Prepolymer werden 0,3 Gew-% DMDEE als Katalysator zugesetzt sowie 2 Gew-% eines kommerziellen Schaumstabilisators (Silikonglykolpolymer). Zu 75 Teilen der Mischung werden 25 Teile einer Treibmittelmischung aus Propan/Dimethylether (1:1) zugefügt. Das Abfüllen in die Druckdosen erfolgt bei erhöhter Temperatur. Nach Abkühlung ist ein gutes Austreten von Schaum aus der Druckdose festzustellen.

### Messergebnisse

Es wird die Haftzugfestigkeit bestimmt.

| | |
|---|---|
| Schaum aus Beispiel 1 | 3,6 N/mm² |
| Schaum aus Beispiel 2 | 3,1 N/mm² |
| Schaum aus Beispiel 3 | 3,2 N/mm² |

Die Beispiele 1 bis 3 werden als Schaum abgefüllt und mit einem handelsüblichen Plastikschlauch appliziert. Dabei wird der Abrutsch-Test durchgeführt. Die Massen rutschen auch nach 12 Std. nicht aus den Fugen.

Vergleichsversuche mit konventionellem Schaummaterial, die übliche Anteile an niedrigmolekularen Isocyanaten aufweisen, ergeben keine Standfestigkeit. Diese rutschen vollständig aus der Fuge.

Es werden weitere Versuche mit Additiven durchgeführt. Diese beeinflussen die Schäumbarkeit nicht wesentlich. Auch die Standfestigkeit nach 12 Std. ist gegeben.
Beispiel 1 + 0,4 % Paraffinöl
Beispiel 2 + 0,2 % UV-Stabilisator
Beispiel 3 + 5% Trichlor-isopropylphosphat

Es zeigt sich, dass der Schaum aus den weiteren erfindungsgemäßen Zusammensetzungen nicht abrutscht, tropft oder eine wesentliche Formveränderung durchführt. Auch nach einer Stunde bleibt das Schaummaterial in der Testfuge erhalten, es bildet sich im unteren Teil keine Ausbuchtung, der obere Teil der Schiene bleibt gefüllt.

## Patentansprüche

1. Vernetzbare schäumbare Zusammensetzung mit niedrigem Gehalt an monomeren Isocyanaten enthaltend
a) 70 bis 99,8 Gew-%, bezogen auf die gesamte Zusammensetzung ohne Treibmittel, von Prepolymeren hergestellt aus Polyetherpolyolen durch Umsetzung mit einem Überschuss an aromatischen Diisocyanaten und nachfolgender Entfernung von überschüssigem monomeren Diisocyanat,
b) 0,2 bis 30 Gew-%, bezogen auf die gesamte Zusammensetzung ohne Treibmittel, Additive, **dadurch gekennzeichnet, dass** als Additive Weichmacher, Schaumstabilisatoren, Katalysatoren, Zellöffner, Flammschutzmittel, nicht reaktive Polymere, Farbstoffe oder Pigmente, und/oder UV-Stabilisatoren enthalten sind,
c) zusätzlich mindestens ein Treibmittel,
wobei die Polyole eine Funktionalität unter 2,5 aufweisen, die Polyole eine Molmasse ( M_{N} ) zwischen 150 und 3000 g/mol aufweisen und die Prepolymere einen Gehalt an monomeren Diisocyanaten unter 5 Gew-% aufweisen und in der Zusammensetzung weniger als 5 Gew.-% Weichmacher enthalten sind,
**dadurch gekennzeichnet, dass** die Viskosität der Zusammensetzung, ohne Treibmittel, zwischen 20000 bis 150000 mPas bei 50°C beträgt, gemessen nach Brookfield/EN ISO 2555 (Spindel 27, 5 min⁻¹).

2. Zusammensetzung nach Anspruch 1, **dadurch gekennzeichnet, dass** der NCO-Gehalt der Zusammensetzung zwischen 2 bis 15 Gew.-% beträgt.

3. Zusammensetzung nach einem der Ansprüche 1 und 2, **dadurch gekennzeichnet, dass** weniger als 1 Gew.-% monomere Diisocyanate in der Zusammensetzung enthalten sind.

4. Zusammensetzung nach einem der Ansprüche 1 oder 3, **dadurch gekennzeichnet, dass** die Mischung zusätzlich oligomere oder polymere nicht flüchtige Isocyanate enthält.

5. Zusammensetzung nach Anspruch 1 bis 4, **dadurch gekennzeichnet, dass** weniger als 10 Gew-% Flammschutzmittel enthalten sind.

6. Zusammensetzung nach einem der vorhergehenden Ansprüche, **dadurch gekennzeichnet, dass** als Treibmittel mindestens 25 Gew.-% der Treibmittel polare Treibmittel sind, insbesondere Dimethylether, Diethylether oder Dimethoxymethan.

7. Zusammensetzung nach einem der vorhergehenden Ansprüche, **dadurch gekennzeichnet, dass** die Haftzugfestigkeit einer geschäumten Zusammensetzung nach 2 Stunden über 1 N/cm² beträgt,
wobei die Haftzugfestigkeit nach folgendem Testverfahren gemessen wird: zwischen zwei waagerechten Prüfplatten (10x20 cm) im Abstand von 2 cm wird der Schaum aufgebracht (Normatmosphäre, 25°C); überstehender Schaum wird entfernt; nach einer Wartezeit von 2 Stunden, die zur Ausbildung des Schaums dient, wird die Zugfestigkeit durch Messen der Kraft bei Zug senkrecht zu den Prüfkörper gemessen (Zwick-Zugprüfmaschine).

8. Einweg-Druckbehälter enthaltend eine Zusammensetzung nach einem der Ansprüche 1 bis 7.

9. Verfahren zum Herstellen einer schäumbaren vernetzbaren Zusammensetzung nach einem der Ansprüche 1 bis 7, wobei das Prepolymer aus mindestens einem Polyol mit einem Überschuss an aromatischen Diisocyanaten im NCO/OH-Verhältnis von 2:1 bis 10:1 hergestellt wird, das nicht reagierte monomere Diisocyanat abdestilliert wird, und zu dieser Mischung die weiteren Bestandteile zugegeben werden, **dadurch gekennzeichnet, dass** das Prepolymer einen Gehalt an monomeren Diisocyanaten von weniger als 5 Gew.-% aufweist.

10. Verfahren zum Herstellen einer schäumbaren vernetzbaren Zusammensetzung nach Anspruch 9, wobei das nicht reagierte monomere Diisocyanat abdestilliert wird auf weniger als 1 Gew-%, und das Prepolymer, Additive und Treibmittel in einen Einweg-Druckbehälter gefüllt und homogenisiert werden.

11. Verfahren zum Herstellen einer schäumbaren vernetzbaren Zusammensetzung nach Anspruch 9, wobei das Treibmittel in mehreren Stufen zugegeben wird.

## Claims

1. A crosslinkable foamable composition having a low content of monomeric isocyanates, containing
a) from 70 to 99.8 wt.%, based on the total composition without propellant, of prepolymers prepared from polyether polyols by reacting with an excess of aromatic diisocyanates and subsequently removing excess monomeric diisocyanate,
b) from 0.2 to 30 wt.%, based on the total composition without propellant, of additives, **characterized in that** plasticizers, foam stabilizers, catalysts, cell openers, flame retardants, non-reactive polymers, dyes or pigments, and/or UV stabilizers are contained as additives,
c) additionally at least one propellant,
the polyols having a functionality of less than 2.5, the polyols having a molar mass (M_{N}) of between 150 and 3,000 g/mol, and the prepolymers having a content of monomeric diisocyanates of less than 5 wt.% and less than 5 wt.% plasticizer being contained in the composition,
**characterized in that** the viscosity of the composition, without propellant, is between 20,000 and 150,000 mPas at 50 °C, measured in accordance with Brookfield/EN ISO 2555 (spindle 27, 5 min⁻¹).

2. The composition according to claim 1, **characterized in that** the NCO content of the composition is between 2 and 15 wt.%.

3. The composition according to one of claims 1 and 2, **characterized in that** less than 1 wt.% of monomeric diisocyanates are contained in the composition.

4. The composition according to one of claims 1 or 3, **characterized in that** the mixture additionally contains oligomeric or polymeric non-volatile isocyanates.

5. The composition according to claims 1 to 4, **characterized in that** less than 10 wt.% flame retardant is contained.

6. The composition according to one of the preceding claims, **characterized in that**, as a propellant, at least 25 wt.% of the propellants are polar propellants, in particular dimethylether, diethylether or dimethoxymethane.

7. The composition according to one of the preceding claims, **characterized in that** the adhesive pull strength of a foamed composition after 2 hours is greater than 1 N/cm², the adhesive pull strength being measured according to the following test method: the foam is applied between two horizontal test plates (10x20 cm) which are 2 cm apart from one another (standard atmosphere, 25 °C); excess foam is removed; after a waiting time of 2 hours, during which the foam forms, the tensile strength is measured by measuring the force when pulling perpendicularly to the test bodies (Zwick tensile testing machine).

8. A disposable pressurized container containing a composition according to one of claims 1 to 7.

9. A method for preparing a foamable crosslinkable composition according to one of claims 1 to 7, the prepolymer being prepared from at least one polyol together with an excess of aromatic diisocyanates in a NCO/OH ratio of 2:1 to 10:1, the non-reacted monomeric diisocyanate being distilled, and the further components being added to this mixture, **characterized in that** the prepolymer has a content of monomeric diisocyanates of less than 5 wt.%.

10. The method for preparing a foamable crosslinkable composition according to claim 9, wherein the non-reacted monomeric diisocyanate is distilled to less than 1 wt.% and the prepolymer, additives and propellant are filled into a disposable pressurized container and homogenized.

11. The method for preparing a foamable crosslinkable composition according to claim 9, wherein the propellant is added in a plurality of stages.

## Revendications

1. Composition moussante réticulable comportant une faible teneur en isocyanates monomères, contenant
a) 70 à 99,8 % en poids, par rapport à la composition totale sans agent d'expansion, de prépolymères produits à partir de polyéther polyols par réaction avec un excès de diisocyanates aromatiques et élimination ultérieure de diisocyanate monomère en excès,
b) 0,2 à 30 % en poids, par rapport à la composition totale sans agent d'expansion, d'additifs, **caractérisée en ce que** des plastifiants, des stabilisateurs de mousse, des catalyseurs, des agents d'ouverture de cellules, des retardateurs de flamme, des polymères non réactifs, des colorants ou des pigments et/ou des stabilisants UV sont contenus en tant qu'additifs,
c) en outre au moins un agent d'expansion,
dans laquelle les polyols présentent une fonctionnalité inférieure à 2,5, les polyols présentent un poids moléculaire (M_{N}) compris entre 150 et 3 000 g/mol et les prépolymères présentent une teneur en diisocyanates monomères inférieure à 5 % en poids et la composition contient moins de 5 % en poids de plastifiants,
**caractérisée en ce que** la viscosité de la composition, sans agent d'expansion, est comprise entre 20 000 et 150 000 mPas à 50 °C, mesurée selon la norme Brookfield/EN ISO 2555 (broche 27, 5 min⁻¹).

2. Composition selon la revendication 1, **caractérisée en ce que** la teneur en NCO de la composition est comprise entre 2 et 15 % en poids.

3. Composition selon l'une des revendications 1 ou 2, **caractérisée en ce que** la composition contient moins de 1 % en poids de diisocyanate monomère.

4. Composition selon l'une des revendications 1 ou 3, **caractérisée en ce que** le mélange contient en outre des isocyanates non volatils oligomères ou polymères.

5. Composition selon les revendications 1 à 4, **caractérisée en ce qu'**elle contient moins de 10 % en poids de retardateurs de flamme.

6. Composition selon l'une des revendications précédentes, **caractérisée en ce qu'**au moins 25 % en poids de l'agent d'expansion sont un agent d'expansion polaire, en particulier du diméthyléther, du diéthyléther ou du diméthoxyméthane.

7. Composition selon l'une des revendications précédentes, **caractérisée en ce que** la résistance à la traction d'éléments adhérents d'une composition moussée est supérieure à 1 N/cm² après 2 heures,
dans laquelle la résistance à la traction d'éléments adhérents est mesurée selon le procédé de test suivant : la mousse est appliquée entre deux plaques d'essai horizontales (10 × 20 cm) à une distance de 2 cm (atmosphère type, 25 °C) ; l'excès de mousse est éliminé ; après un temps d'attente de 2 heures, qui sert à la formation de la mousse, la résistance à la traction est mesurée en mesurant la force de traction perpendiculairement au corps d'essai (machine d'essai de traction Zwick).

8. Récipient sous pression jetable contenant une composition selon l'une des revendications 1 à 7.

9. Procédé de préparation d'une composition moussante réticulable selon l'une des revendications 1 à 7, dans lequel le prépolymère est préparé à partir d'au moins un polyol comportant un excès de diisocyanates aromatiques dans le rapport NCO/OH de 2:1 à 10:1, le diisocyanate monomère n'ayant pas réagi est éliminé par distillation et les autres composants sont ajoutés audit mélange, **caractérisé en ce que** le prépolymère présente une teneur en diisocyanates monomères inférieure à 5 % en poids.

10. Procédé de préparation d'une composition moussante réticulable selon la revendication 9, dans lequel le diisocyanate monomère n'ayant pas réagi est éliminé par distillation à moins de 1 % en poids, et le prépolymère, les additifs et l'agent d'expansion sont chargés dans un récipient sous pression jetable et homogénéisés.

11. Procédé de préparation d'une composition moussante réticulable selon la revendication 9, dans lequel l'agent d'expansion est ajouté en plusieurs étapes.
